# EUROPEAN PATENT APPLICATION

(11) **EP 4 823 056 A1**
(43) Date of publication of application: **14.10.2026**
(21) Application number: 26170816.8
(22) Date of filing: 07.04.2026
(51) Int. Cl.: H04L 45/50, H04L 47/11, H04L 47/24, H04L 47/31, H04L 47/2408

(54) **EXTENDED QUALITY OF SERVICE IN LABEL-SWITCH PACKETS**

(30) Priority: 09.04.2025 US 202519174067
(71) Applicant: Nokia Solutions and Networks Oy, 02610 Espoo (FI)
(72) Inventor: DUTTA, Pranjal Kumar, Sunnyvale, CA 94086 (US)
(74) Representative: Nokia EPO representatives

(57) **Abstract**

In a label-switching network, such as an MPLS network, the label-switch packets have an extended special purpose label (ESPL) to encode one or more quality of service (QoS) attributes, such as indications of congestion level, discard eligibility, and/or Differentiated Services Code Point (DSCP) value. In some embodiments, the ESPL label is an extended QoS label having a two-bit indication of congestion level, a two-bit indication of discard eligibility, and a six-bit DSCP value. By including a DSCP value of more than three bits in the ESPL label, the MPLS network can provide a greater variety of per-hop behaviors (PHBs) when routing MPLS packets than conventional MPLS networks, which are limited to no more than eight PHBs.

## Description

### BACKGROUND

### Field of the Disclosure

The present disclosure relates to communication networks and, more specifically but not exclusively, to communication networks that conform to the MPLS protocol.

### Description of the Related Art

This section introduces aspects that may help facilitate a better understanding of the disclosure. Accordingly, the statements of this section are to be read in this light and are not to be understood as admissions about what is prior art or what is not prior art.

In a communication network that supports the Multi-Protocol Label Switching (MPLS) protocol, a Forwarding Equivalence Class (FEC) is a set of packets that are treated identically by a router in terms of forwarding decisions. Packets belonging to the same FEC, follow the same Label-Switched Path (LSP). Instead of making a forwarding decision on a per-packet basis, routers assign packets to a FEC at the network's ingress Label Edge Router (LER) and push the label that identifies the LSP at the next-hop router. As packets travel through the MPLS network, each transit Label Switch Router (LSR) pops the label, determines the next hop based on the label, and pushes zero or more labels before sending the packet to the next hop. This label-switching process continues until the packet reaches the egress LER of the LSP. At the egress LER, the label is popped, and the packet is forwarded further based on its original/native header (e.g., Ethernet header, IP header). The final destination of the packet may lie outside the MPLS domain. All packets within the same FEC are forwarded along the same LSP. This simplifies packet forwarding by reducing the number of decisions routers need to make once the packets are labelled.

In a typical configuration, an MPLS network may receive incoming IPv4 packets from an IPv4 network at the MPLS network's ingress LER. The ingress LER will convert the IPv4 packets into MPLS packets for routing through the MPLS network, where the payload of each MPLS packet is the corresponding IPv4 packet. When the MPLS packets arrive at the MPLS network's egress LER, the egress LER converts those MPLS packets back into IPv4 packets for further handling by another IPv4 network.

An IPv4 network may support up to 64 different Per-Hop Behaviors (PHBs) and IP headers for IPv4 packets have a 6-bit field that identifies the particular PHB for each IPv4 packet. In a conventional MPLS network, each label is encoded in a 32-bit MPLS shim header having a 20-bit label field that encodes the label value, a 3-bit EXP field that encodes the type of service (TOS) associated with the packet encapsulated by the shim header, a 1-bit S field that indicates if the shim header is the bottom of the label stack, and an 8-bit Time-To-Live (TTL) field.

An MPLS router provides quality of service (QoS) treatment based on the TOS value encoded in the EXP field. Because the EXP field has only three bits, MPLS packets can support only eight different PHBs. As a result, in practice, the up to 64 different PHBs of an incoming IPv4 packet are mapped to at most eight different PHBs in an MPLS packet, thereby losing the full variety of different PHBs while the MPLS packet is routed through the MPLS network. Note that MPLS transit routers are unable to examine the payload of an MPLS packet in order to determine the packet's full, 6-bit PHB value.

### SUMMARY

Problems in the prior art are addressed in accordance with the principles of the present disclosure by adding an extended QoS label to MPLS packets that encodes more than three (e.g., up to six) bits of PHB data in order to support a greater number of different PHBs than are available in routing conventional MPLS packets, which encode only three bits of PHB data.

### BRIEF DESCRIPTION OF THE DRAWINGS

Embodiments of the disclosure will become more fully apparent from the following detailed description, the appended claims, and the accompanying drawings in which like reference numerals identify similar or identical elements.
FIG. 1 is a simplified block diagram of a prior-art communication system;
FIG. 2 is a representation of the format of a conventional MPLS label;
FIG. 3 is a simplified block diagram of a communication system according to certain embodiments of the disclosure;
FIG. 4 is a representation of the format of MPLS packets according to certain embodiments of the disclosure;
FIG. 5 is a flow diagram of the processing performed by the ingress LER R1 of FIG. 3 to process an IPv4 packet P1 received from an IPv4 network;
FIG. 6 is a flow diagram of the processing associated with the queuing and scheduling decision performed by the ingress LER R1 of FIG. 3;
FIG. 6A is a flow diagram of the processing associated with the ECN update of step 616 of FIG. 6 performed by the ingress LER R1 of FIG. 3;
FIG. 7 is a flow diagram of the queuing and scheduling processing performed by both the transit LSR R2 and the egress LER R3 of FIG. 3; and
FIG. 8 is a simplified hardware block diagram of an example node that can be used to implement any of the routers R1, R2, and R3 of FIG. 3.

### DETAILED DESCRIPTION

Detailed illustrative embodiments of the present disclosure are disclosed herein. However, specific structural and functional details disclosed herein are merely representative for purposes of describing example embodiments of the present disclosure. The present disclosure may be embodied in many alternate forms and should not be construed as limited to only the embodiments set forth herein. Further, the terminology used herein is for the purpose of describing particular embodiments only and is not intended to be limiting of example embodiments of the disclosure.

As used herein, the singular forms "a," "an," and "the," are intended to include the plural forms as well, unless the context clearly indicates otherwise. It further will be understood that the terms "comprises," "comprising," "contains," "containing," "includes," and/or "including," specify the presence of stated features, steps, or components, but do not preclude the presence or addition of one or more other features, steps, or components. It also should be noted that in some alternative implementations, the functions/acts noted may occur out of the order noted in the figures. For example, two figures shown in succession may in fact be executed substantially concurrently or may sometimes be executed in the reverse order, depending upon the functions/acts involved.

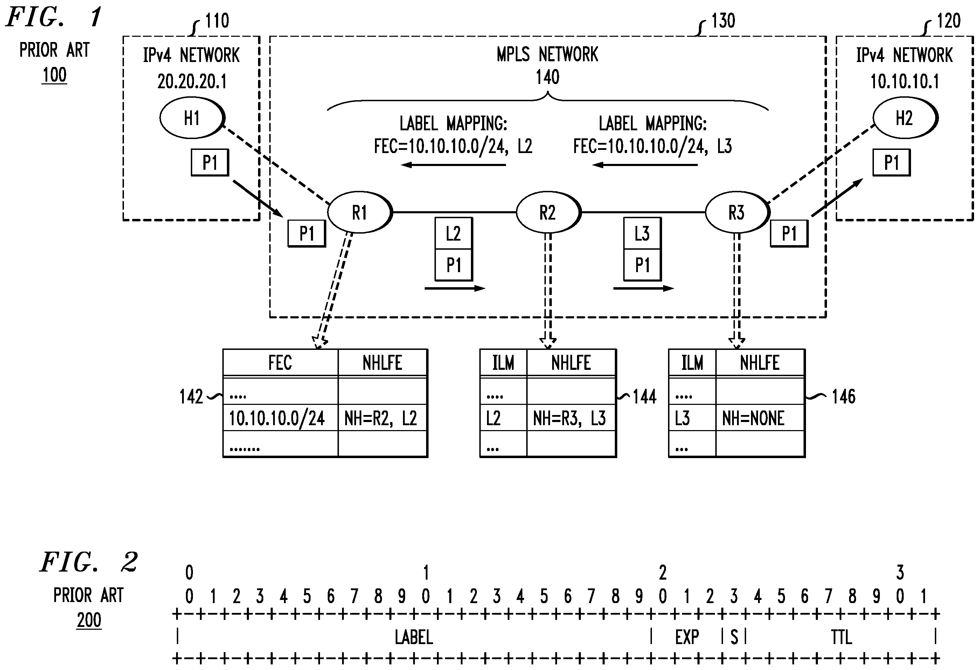

FIG. 1 is a simplified block diagram of a prior-art communication system 100 comprising a prior-art MPLS network 130 located between two conventional IPv4 networks 110 and 120. As represented in FIG. 1, the MPLS network 130 has an ingress LER R1 connected to an egress LER R3 by a label-switched path (LSP) 140 comprising transit LSR R2. Those skilled in the art will understand that, in general, the LSP 140 may have more than one transit LSR between the ingress and egress LERs R1 and R3, and the MPLS network 130 may have more than one ingress LER and/or more than one egress LER interconnected by different LSPs comprising different sets of transit LSRs. It will also be understood that, for different LSPs, an LER may function as either an ingress LER or an egress LER. Thus, for example, for communication from IPv4 network 120 to IPv4 network 110, LER R3 may function as an ingress LER and/or LER R1 may function as an egress LER and the LSP for that communication might or might not include transit LSR R2.

In the example of FIG. 1, H1 is an end user (host) in the IPv4 network 110 with subnet 20.20.20.0/24, where H1 is configured with IPv4 address 20.20.20.1. H2 is an end user in the IPv4 network 120 with subnet 10.10.10.0/24, where H2 is configured with IPv4 address 10.10.10.1. H1 transmits each packet P1 to H2 over the MPLS network 130.

In the MPLS network 130, the LSP 140 is configured for the FEC that represents the subnet 10.10.10.0/24. The label assignment begins from the gateway MPLS router of the FEC. In this case, the gateway for the subnet 10.10.10.0/24 is edge router R3 since this is the LER in the MPLS network 130 that connects to the IPv4 network 120 having the subnet 10.10.10.0/24.

LER R3 allocates label L3 for the FEC 10.10.10.0/24 from its local label space. Then LER R3 programs an entry for label L3 in its Incoming Label Map (ILM) table 146. In general, an ILM table maps an incoming label to its outgoing operation, which is encoded in a Next Hop Label Forwarding Entry (NHLFE) in the ILM table. In the case of label L3, the NHLFE indicates that this is egress for LSP 140, i.e., no next MPLS hop (NH=none). LER R3 advertises the label mapping for the FEC to upstream transit LSR R2 through a suitable control protocol such as LDP (Label Distribution Protocol), BGP (Border Gateway Protocol), or RSVP-TE (Resource ReserVation Protocol - Traffic Engineering).

When LSR R2 receives the label mapping for the FEC from LER R3, LSR R2 allocates label L2 for the FEC from its local label space. Then LSR R2 programs an entry into its ILM table 144 for label L2, where the corresponding NHLFE indicates the next hop as LER R3 and the outgoing label as label L3. LSR R2 advertises the label mapping for the FEC to upstream LER R1.

When LER R1 receives the label mapping for the FEC from LSR R2, LER R1 finds that it is an ingress router to the MPLS network 130 with respect to IPv4 network 110. So, LER R1 programs its FTN (FEC-To-NHLFE) table 142 with the FEC entry that maps to an NHLFE, where the NHLFE indicates the next hop as LSR R2 and the outgoing label as label L2.

FIG. 2 is a representation of the format of a conventional MPLS label 200. As shown in FIG. 2, the label 200 comprises:
- A conventional 20-bit Label value that encodes the label value;
- A conventional 3-bit EXP value used to encode the result of mapping the 6-bit IPv4 PHB field down to three bits. A conventional EXP value encodes the type of service (TOS) associated with the MPLS packet being routed according to this LSP label. In a prior-art router that provides QoS treatment, the TOS value determines that type of QoS treatment applied to the packet;
- A conventional 1-bit S value that indicates whether the label 200 is the bottom of the label stack, i.e., no more labels follow the current label 200. In general, multiple labels can be stacked together in an MPLS packet; thus, this indication is necessary. S=1 indicates that the current label 200 is the last one in the label stack; and
- A conventional 8-bit Time-To-Live (TTL) value. Each MPLS forwarding router decrements the TTL value by 1. A TTL value of 0 indicates that the packet is looping within the MPLS network and needs to be dropped. Typically, the maximum number of hops of an LSP does not exceed 30. Generally, an ingress LER sets the TTL value to the maximum value, i.e., 255. If a packet sent on the LSP experiences TTL expiry, then it is assumed that there is a loop in the path.

Referring again to FIG. 1, host H1 in IPv4 network 110 sends an IPv4 packet P1 to host H2 in IPv4 network 120, where the source address and destination address in the IPv4 header of P1 are 20.20.20.1 and 10.10.10.1, respectively. Based on the destination address, P1 is forwarded along the IPv4 network 110 until P1 reaches LER R1. At LER R1, the destination address 10.10.10.1 of P1 matches the FEC 10.10.10.0/24 in FTN table 142, based on a longest prefix match (LPM) rule. Based on the NHLFE that corresponds to FEC 10.10.10.0/24, LER R1 pushes label L2 onto payload P1 and the resultant MPLS packet {L2, P1} is forwarded to LSR R2. Since label L2 is the only label on the payload P1, the S-bit in label L2 is set to 1.

LSR R2 receives the MPLS packet {L2, P1} with topmost label L2. LSR R2 pops label L2 from the MPLS packet and searches ILM table 144 for label L2. Based on the NHLFE that corresponds to label L2, LSR R2 pushes label L3 onto P1 and the resultant MPLS packet {L3, P1} is forwarded to LER R3.

LER R3 receives the MPLS packet {L3, P1} with topmost label L3. LER R3 pops label L3 from the packet and searches its ILM table 146 for label L3. Based on the NHLFE that corresponds to label L3, LER R3 determines that it is the egress router for LSP 140 and forwards payload P1 further based on its native forwarding method (in this case, IPv4-based forwarding).

Although, for simplicity, only one LSR (i.e., R2) is shown in FIG. 1, in general, an MPLS LSP can comprise a path that includes multiple LSRs (e.g., up to 30 hops). There could be also multiple paths in an MPLS network for a FEC. The choice of a path (or a subset of paths) is determined by the nature of the FEC and the path computation algorithms.

QoS in MPLS relates to relative differentiation or classification of packets transported over an LSP, based on which differential forwarding treatment is offered, although all packets follow the same path along the LSP. An LSP can carry packets for various applications, where different applications can have varying degrees of QoS requirements. For example, low latency for real-time voice and video traffic, high throughput for bulk data transfer, high priority and lower packet drops for network control protocols, etc. The classification of packets is done based on the EXP value encoded in the MPLS label. The 3-bit EXP field allows up to eight classes. Since an LSR can forward packets for a large number of LSPs (e.g., up to 512K), differential treatment at per LSP granularity is not scalable. As such, MPLS routers offer differential forwarding treatment at the aggregate level, i.e., all packets of a certain class across all LSPs that route to the same next hop are aggregated together to receive the same treatment. An aggregated differential treatment is called Per-Hop Behavior (PHB). So, a conventional MPLS router implements eight PHBs per next hop. A PHB is implemented by specific queueing, scheduling, congestion control policies to meet the QoS of the associated traffic class.

QoS in MPLS is inherited from the QoS framework standardized for any packet switching network. The framework is described in RFC 2475 (An Architecture for Differentiated Services), the teachings of which are incorporated herein by reference in their entirety, which standardized the Per-Hop Behaviors (PHBs) in a Differentiated Services (DiffServ) network domain. PHBs are rules that dictate how network devices (like routers and switches) treat individual packets as they travel across the network.

RFC 2475 defines 64 PHBs, which means 64 possible traffic classes in a network. Each PHB or traffic class is assigned a standard codepoint encoded in a 6-bit IPv4 field called Differentiated Services Code Point (DSCP). Because MPLS packets have an EXP field with only three bits, the up to 64 different traffic classes need to be mapped to no more than eight different EXP values, which significantly limits the number of traffic classes supported in conventional MPLS routing.

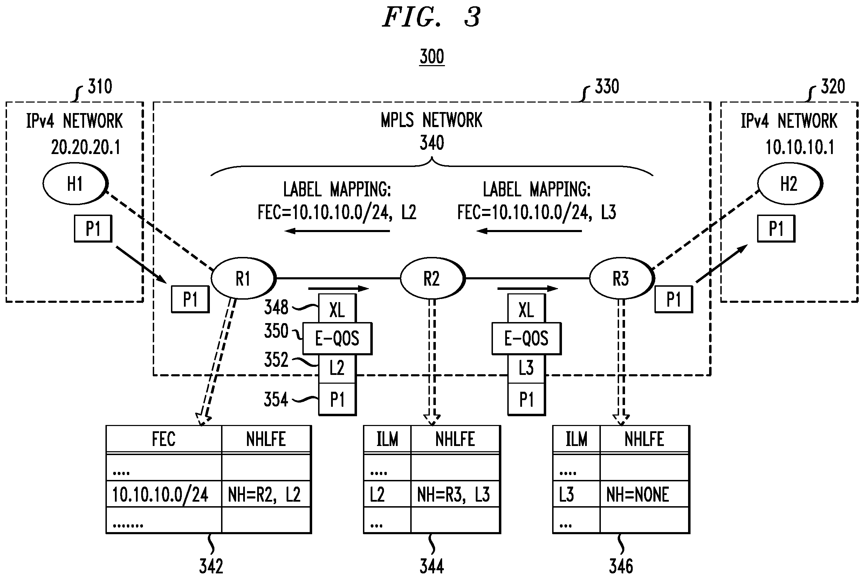

FIG. 3 is a simplified block diagram of a communication system 300 comprising an MPLS network 330 located between two conventional IPv4 networks 310 and 320, according to certain embodiments of the disclosure. The elements of communication system 300 are analogous to the elements of communication system 100 of FIG. 1 with analogous elements having analogous labels.

MPLS network 330 employs a new label referred to as an Extended QoS label or E-QOS label, for short. As described further below, an E-QOS label allows room for additional QoS markings such as all standard PHBs/DSCPs, Explicit Congestion Notification (ECN), and several drop priority levels (DE) within a PHB. When a packet is transported over an MPLS LSP, the E-QOS label is encoded in conjunction with the LSP label stack.

The E-QOS label is defined according to rules introduced in RFC 7274 "Allocating and Retiring Special-Purpose MPLS Labels", the teachings of which are incorporated herein by reference in their entirety, for defining special labels. RFC 7274 defines label value 15 as an Extension Label (XL) which indicates that an Extended Special Purpose Label (ESPL) follows after it. The ESPL encodes a label value that has a special purpose. The special purpose needs to be defined when standardizing an ESPL value. Basically, the XL label is an indicator that an ESPL follows since ESPL needs to be distinguished from other LSP labels in the MPLS label stack.

Referring to FIG. 3, in addition to the payload (e.g., P1 in FIG. 3) and a stack of one or more labels (e.g., L2 and L3 in FIG. 3), an MPLS packet of FIG. 3 also includes an extension label (XL) 348 and a (new) extended QOS (E-QOS) label 350. In the implementation of FIG. 3, the MPLS packet {XL, E-QOS, L2, P1} forwarded from LER R1 to LSR R2 has XL label 348 atop E-QOS label 350 atop label L2 atop payload P1, where the entire IPv4 packet P1 is the MPLS packet payload. Similarly, the MPLS packet {XL, E-QOS, L3, P1} forwarded from LSR R2 to LER R3 has XL label 348 atop E-QOS label 350 atop label L3 atop payload P1. Note that, during MPLS routing through the MPLS network 330, the transit LSR R2 does not have access to the information stored in the MPLS payload P1.

Those skilled in the art will understand that, in general, an extension label having label value 15 is used to identify that the MPLS packet has an additional, non-LSP label following the extension label, in this case, the E-QOS label 350.

The ingress LER R1 forwards the MPLS packet {XL, E-QOS, L2, P1} to the next hop (i.e., transit LSR R2), which is programmed with ILM table 344, which identifies the egress LER R3 and the label L3 as the NHLFE for the MPLS packet. As such, the transit LSR AF replaces label L2 with label L3 in the MPLS packet and forwards the MPLS packet {XL, E-QOS, L3, P1} to the egress LER R3, which is programmed with ILM table 346, which identifies that there is no next hop for the MPLS packet within the MPLS network 330. Instead, the egress LER R3 converts the MPLS packet back into the IPv4 packet P1 for transmission to the host H2 in the second IPv4 network 320.

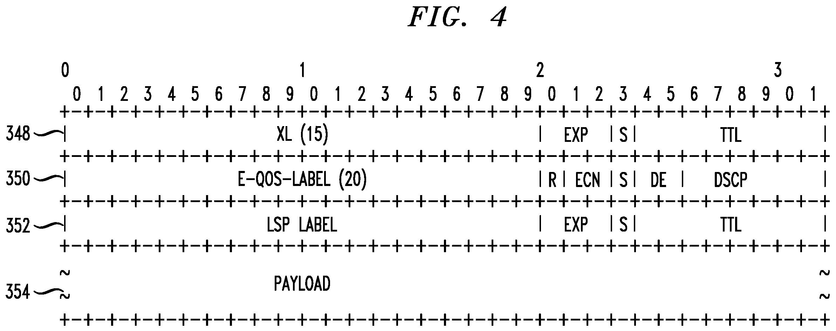

FIG. 4 is a representation of the format of the MPLS packets of FIG. 3, according to certain embodiments of the disclosure. As shown in FIG. 4, the MPLS packet has the 32-bit extension label 348 atop the 32-bit extended QoS label 350 atop one or more conventional 32-bit LSP labels 352 atop the conventional MPLS payload 354. Those skilled in the art will understand that other suitable formats could be used for the MPLS packets, such as, for example, one or more conventional LSP labels 352 atop the extension label 348 atop the extended QoS label 350 atop the payload 354.

The conventional LSP labels 352 and the payload 354 in the MPLS packets in FIG. 3 have the same formats as the analogous LSP labels and payload in the MPLS packets in FIG. 1.

The extension label 348 comprises:
- A 20-bit XL label value having the value 15 to indicate that the next label in the MPLS packet is a non-LSP label;
- A conventional 3-bit EXP value;
- A conventional 1-bit S value; and
- A conventional 8-bit TTL value.

The extended QoS label 350 comprises:
- A 20-bit E-QOS value having the previously unallocated value 20 (or any other suitable unallocated value from the Extended Special Purpose Label (ESPL) space) that indicates that the current label 350 is an E-QOS label;
- A reserved bit R;
- A 2-bit Explicit Congestion Notification (ECN) value used to identify congestion, if any, in the LSP 340. In one implementation, ECN encodes the following values:
   00: Non-ECN-Capable Transport (Non-ECT) - ECN is not used;
   01 or 10: ECN-Capable Transport (ECT-1 or ECT-0)- the transport is ECN capable; and
   11: Congestion Experienced (CE) - the MPLS packet P1 has experienced congestion;
- A conventional 1-bit S value;
- A 2-bit Discard Eligibility (DE) value used to indicate relative drop-priority level. In one implementation, higher DE values indicate higher priority for dropping the MPLS packet in case of congestion; and
- A 6-bit Differentiated Services Code Point (DSCP) value used to encode the 6-bit IPv4 PHB value in the corresponding IPv4 packet P1.

Referring again to FIG. 3, ingress LER R1 for the LSP 340 pushes E-QOS label 350 into the label stack of the MPLS packet. LER R1 encodes the ECN, DSCP, and DE fields according to the traffic class of the payload. For example, if the payload is an IP packet, then (i) ECN bits from the IP header are copied into the ECN field of E-QOS label 350 and (ii) DSCP bits from the IP header are copied into the DSCP field of E-QOS label 350. The DE field of the E-QOS label 350 may be encoded by the ingress LER R1 as per the drop priority determined by deeper inspection of the payload (e.g., if the payload contains a BGP packet then look at the BGP packet type).

Then LER R1 schedules the MPLS packet for forwarding to the next hop of the LSP 340. If the packet experiences congestion during forwarding, then LER R1 can do CE marking in the ECN field on the E-QOS label 350. The forwarding treatment (queue, scheduler, etc.) is determined as per the PHB encoded in the DSCP field of the E-QOS label 350, not according to the EXP field of LSP label 352. Basically, the DSCP field overrides the EXP field of LSP label 352. If the packet needs to be dropped for congestion control, then the DE field is used to determine drop eligibility. If the packet is not to be dropped, then finally the packet is sent to the next hop.

When an MPLS packet is received by a transit LSR and the two topmost labels indicate the presence of E-QOS label 350, then the E-QOS label 350 is popped and the label subsequent to the E-QOS label 350 is considered as the incoming label for an LSP. Based on the LSP label, the LSR makes a forwarding decision, i.e., the LSP label is popped and the label is looked up in the ILM table. If the corresponding NHLFE requires pushing an outgoing label, then the outgoing label is pushed onto the packet.

Subsequently, the E-QOS label 350 and the XL label 348 are pushed such that they are retained at the top-most portion of the packet. Further actions for forwarding to the next hop are the same as described for the previous hop.

When the egress LER R3 of the LSP 340 receives the MPLS packet with an E-QOS label, the LER R3 propagates the QoS markings from E-QOS label to the payload, according to the specifications of the payload. For example, if the payload is an IP packet, then ECN and DSCP fields from the E-QOS label are propagated to the ECN and DSCP fields of the IP header.

In the particular example represented in FIG. 3, ingress LER R1 receives the IPv4 packet P1 from host H1. The packet matches the FEC 10.10.10.0/24 in its FTN Table 142. Based on the NHLFE, LER R1 pushes the label L2 onto the packet to be sent to the next hop LSR R2. Subsequently, LER R1 pushes E-QOS label 350 and XL label 348 onto the packet. The DSCP and ECN bits from the IPv4 header of packet P1 are copied into the DSCP and ECN fields of the E-QOS label 350.

Values for DE field can be derived based on deeper inspection of the IPv4 packet (e.g., BGP packet type). LER R1 send the MPLS packet {XL, E-QOS, L2, P1} to LSR R2. While sending the packet out, all QoS differentiations are done based on the DSCP, ECN, and DE fields in the E-QOS label 350.

When LSR R2 receives the MPLS packet {XL, E-QOS, L2, P1}, LSR R2 finds E-QOS label 350 atop the packet. So, LSR R2 pops E-QOS label 350 and preserves it for later use. LSR R2 considers the next label L2 as the incoming label for an LSP, so pops label L2 and looks up L2 in its ILM table 344. Based on the NHLFE, LSR R2 pushes the label L3 onto the packet to be sent to the next hop LER R3. LSR R2 pushes the preserved E-QOS label 350 and the XL label 348 onto the packet and sends the packet {XL, E-QOS, L3, P1} to LER R3. While sending the packet out, all QoS differentiations are done based on the DSCP, ECN, and DE fields in the E-QOS label 350.

When LER R3 receives the MPLS packet {XL, E-QOS, L3, P1}, LER R3 finds E-QOS label 350 atop the packet. So, LER R3 pops E-QOS label 350 and preserves it for later use. LER R3 considers the next label L3 as the incoming label for an LSP, so pops label L3 and looks up label L3 in its ILM table 346. Based on the NHLFE, LER R3 determines that it is an egress LSR for the LSP 340. LER R3 copies the DSCP and ECN values in the preserved E-QOS label 350 into the DSCP and ECN fields in IPv4 header of packet P1, and then sends IPv4 packet P1 to host H2 using IPv4 forwarding procedures.

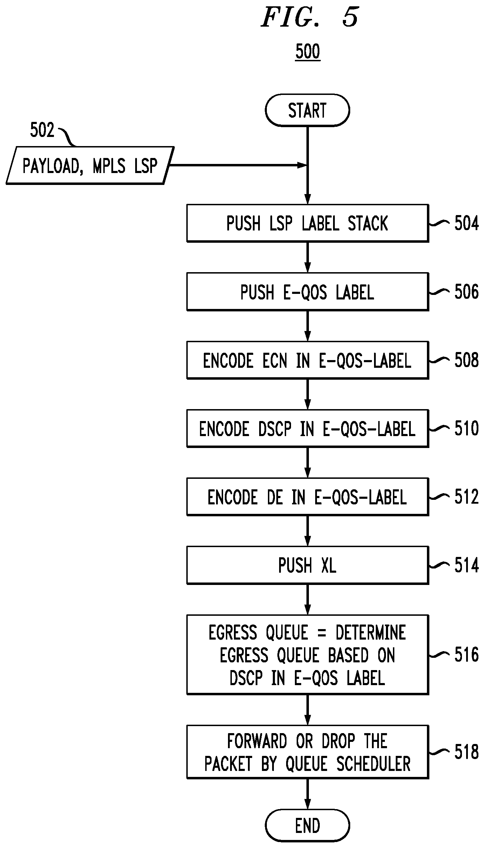

FIG. 5 is a flow diagram of the processing 500 performed by the ingress LER R1 of FIG. 3 to process the IPv4 packet P1 received from the IPv4 network 310. In step 502, the ingress LER R1 receives (i) the IPv4 packet P1, which will become the payload of the MPLS packet, and (ii) identification of the LSP 340. In step 504, the ingress LER R1 pushes one or more LSP labels (i.e., the label stack) for LSP 340 - in this case, just the label L2 - onto the packet P1.

In step 506, the ingress LER R1 pushes the extended QoS label 350 (with label value 20) onto the packet. In step 508, the ingress LER R1 encodes an initial value (e.g., 00 for Non-ECT; 01 or 10 for ECT-1 or ECT-0) into the ECN field of the E-QOS label 350 based on the ECN information in the payload (e.g., copies ECN bits from the IP header of IPv4 packet P1). In step 510, the ingress LER R1 encodes the DSCP field of the E-QOS label 350 based on the DSCP or equivalent (e.g., PHB ID) information in the payload (e.g., copies DSCP bits from the IP header of IPv4 packet P1). In step 512, the ingress LER R1 encodes the DE field of the E-QOS label 350 based on the equivalent information in the payload.

In step 514, the ingress LER R1 pushes the extendsion label 348 (with label value 15) onto the packet to indicate that a non-LSP label (in this case, the E-QOS label 350) is the subsequent label in the MPLS packet. In step 516, the ingress LER R1 determines the egress queue (not shown) for the MPLS packet based on the traffic class derived from the 6-bit DSCP value in the E-QOS label 350. In step 518, the ingress LER R1 makes a queuing and scheduling decision that results in either forwarding the MPLS packet to the next hop of the LSP 340 or dropping the MPLS packet.

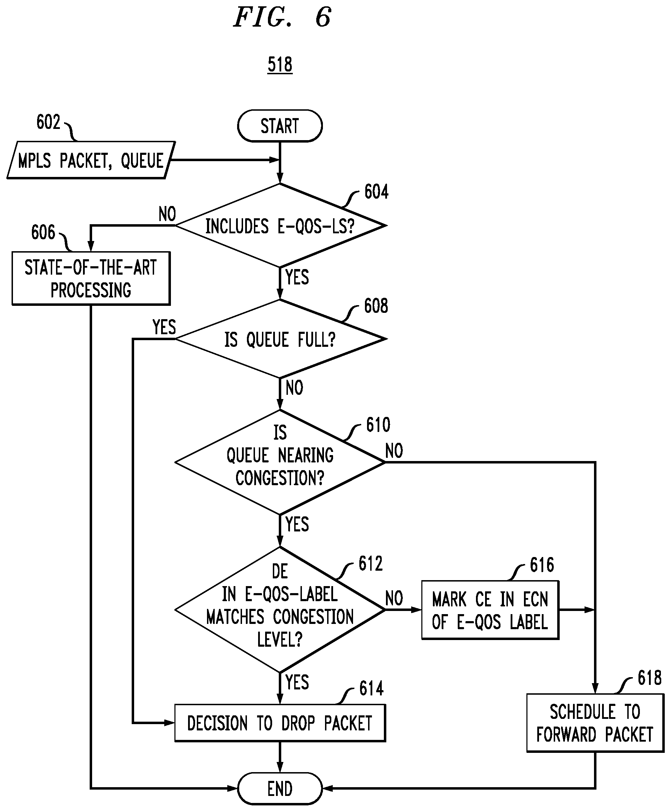

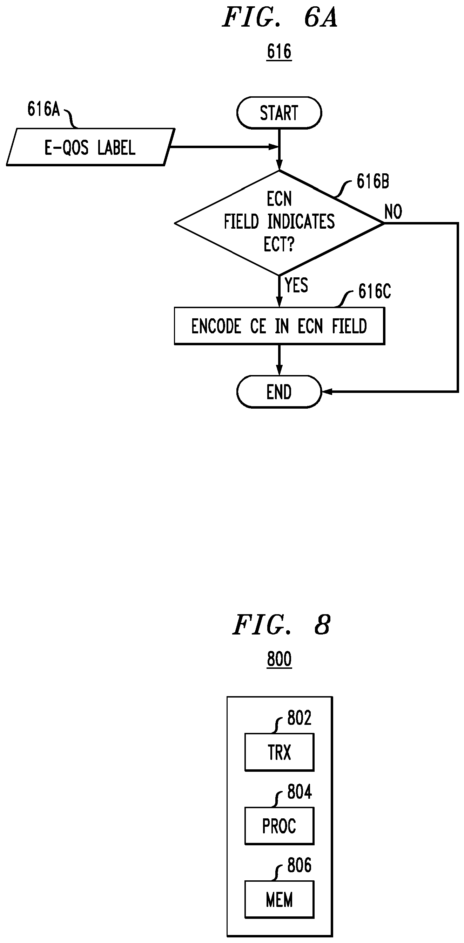

FIG. 6 is a flow diagram of the processing associated with the queuing and scheduling decision of step 518 of FIG. 5 performed by the ingress LER R1 of FIG. 3. In step 602, the inputs to the queuing and scheduling decision are the MPLS packet and the identification of the egress queue determined in step 516 of FIG. 5. In step 604, the ingress LER R1 determines whether the MPLS packet has an extended QoS label. If not, then processing proceeds to step 606, where the ingress LER R1 performs conventional, state-of-the-art queuing and scheduling for the MPLS packet.

If the ingress LER R1 determines in step 604 that the MPLS packet has an extended QoS label (in this case, E-QOS label 350), then, in step 608, the ingress LER R1 determines whether the corresponding queue is full, i.e., 100% utilized and no packet can be added to the queue. If so, then processing proceeds to step 614, where the ingress LER R1 drops the MPLS packet. Otherwise, processing proceeds to step 610, where the ingress LER R1 determines whether the corresponding queue is nearing congestion (e.g., greater than a specified percentage full). If not, the processing proceeds to step 618, where the ingress LER R1 schedules the MPLS packet for forwarding to the next hop.

Otherwise, if the ingress LER R1 determines in step 610 that the corresponding queue is nearing congestion, then processing proceeds to step 612, where the ingress LER R1 determines whether the congestion level determined in step 610 matches (or exceeds) the DE value encoded in the E-QOS label 350 in the MPLS packet. If so, then processing proceeds to step 614 to drop the MPLS packet. Otherwise, processing proceeds to step 616, where the ingress LER R1 encodes the CE value (e.g., 11) into the ECN field of the E-QOS label 350 in the MPLS packet based on evaluation of ECN-Capable Transport (ECT) criteria. Processing then proceeds to step 618, where the ingress LER R1 makes the forwarding decision and schedules the MPLS packet into the selected queue.

FIG. 6A is a flow diagram of the processing associated with the ECN update of step 616 of FIG. 6 performed by the ingress LER R1 of FIG. 3. In step 616A, the input to the ECN update is E-QOS label 350 of FIGs. 3 and 4. In step 616B, the ingress LER R1 determines whether the ECN field indicates ECT, i.e., if the value is either 01 or 10. If the ECN field indicates ECT, then processing proceeds to step 616C; otherwise, the processing of FIG. 6A terminates. In step 616C, the ingress LER R1 encodes CE (value 11) in the ECN field to indicate that congestion is experienced by the packet. The processing of FIG. 6 terminates after step 616C.

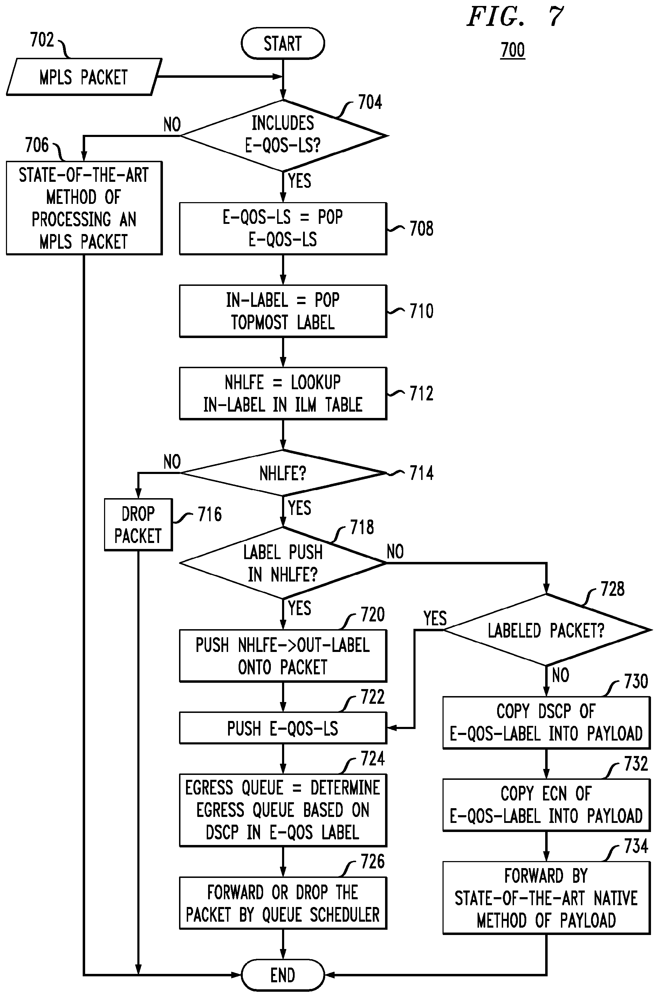

FIG. 7 is a flow diagram of the queuing and scheduling processing 700 performed by both the transit LSR R2 and the egress LER R3 of FIG. 3 (referred to generically as "the node" for the description of FIG. 7). In step 702, the node receives the MPLS packet from the previous hop. In step 704, the node determines whether the MPLS packet has an extended QoS label. If not, then processing proceeds to step 706, where the node performs conventional, state-of-the-art queuing and scheduling for the MPLS packet.

If the node determines in step 704 that the MPLS packet has an extended QoS label (in this case, E-QOS label 350), then, in step 708, the node pops the E-QOS label 350 of the MPLS packet. In step 710, the node pops the topmost label in the MPLS packet as the incoming label of LSP 340 and determines the label value (In-Label). In step 712, the node looks up the label value In-Label in the node's ILM table (e.g., 344 or 346 of FIG. 3) to retrieve the next hop NHLFE, if any.

In step 714, the node determines whether the node's ILM table identifies a next hop. If not, then processing proceeds to step 716, where node drops the MPLS packet. Otherwise processing proceeds to step 718, where the node determines whether the NHLFE requires pushing an outgoing label to a next hop. If so, then, in step 720, the node pushes the LSP label for NHLFE onto the MPLS packet. In step 722, the node pushes the E-QOS label 350 (saved from step 708) and the XL label 348 back onto the MPLS packet, since the MPLS packet is going to be forwarded as a labelled packet. In step 724, the node determines the egress port for the MPLS packet based on the DSCP value in the E-QOS label 350. In step 726, the node makes a queuing and scheduling decision that results in either forwarding the MPLS packet to the next hop of the LSP 340 or dropping the MPLS packet. Note that step 726 may be implemented using the processing of FIG. 6.

If the node determines, in step 718, that the NHLFE does not require pushing an outgoing label to a next hop, then the processing proceeds to step 728, where the node determines whether the MPLS packet has any more labels. If so, then the packet is still a labelled packet, the node is a transit LSR (in this case, transit LSR R2), and processing proceeds to step 722 as described above. Otherwise, the packet is no longer a labeled packet, the node is an egress LER (in this case, egress LER R3), and processing proceeds to step 730, where the node copies the DSCP value from the E-QOS label 350 into the native header of an IPv4 packet, and then to step 732, where the node copies the ECN value from the E-QOS label 350 into that native header to re-generate the IPv4 packet P1 of FIG. 3. In step 734, the node forwards the IPv4 packet P1 to the host H2 in the second IPv4 network 320 using state-of-the-art native processing.

As evidenced by the processing EA of FIG. 6, the six bits of the DSCP field in the E-QOS label 350 enable MPLS packets to be forwarded from each hop to the next using more-appropriate queues than might otherwise be employed if only three (or fewer) bits are available to encode the 6-bit PHB values of the incoming IPv4 packets, thereby potentially improving the QoS of the routing of MPLS packets through the MPLS network, such as the MPLS network 330 of FIG. 3, and into the next, non-label-switched network, such as the second IPv4 network 320 of FIG. 3.

In step 732, the node copies the ECN field to the native header (e.g., IPv4). The node does not have to check ECT capability, because, in the ingress LER R1, the ECN field was copied "as is" from the IPv4 header to the ECN field of the E-QOS label. Then, along the MPLS hops till the egress LER R3, the method of FIG. 6A ensures that CE is marked in the ECN field of E-QOS label only if the field indicates ECT. Thus, the egress LER R3 can just copy the ECN field of E-QOS label back to the IPv4 header.

FIG. 8 is a simplified hardware block diagram of an example node 800 that can be used to implement any of the routers R1, R2, and R3 of FIG. 3. As shown in FIG. 8, the node 800 includes (i) communication hardware (e.g., wireless, wireline, and/or optical transceivers (TRX)) 802 that supports communications with other nodes, (ii) one or more processors (e.g., CPU and/or GPU microprocessors) 804 that control the operations of the node 800 and/or process data within the node 800, and (iii) one or more memories (e.g., RAM, ROM) 806 that store code executed by the processors 804 and/or data generated and/or received by the node 800.

Although the present disclosure has been described in the context of MPLS packets having extended QoS labels having a 6-bit DSCP field, a 2-bit ECN field, a 2-bit DE field, and a 1-bit S field, in general, extended QoS labels may have the same or other appropriate fields with the same or different numbers of bits. For example, an extended QoS label for MPLS packets may have a DSCP field having four or more bits and/or an ECN field having one or more bits and/or a DE field having one or more bits.

Although the present disclosure has been described in the context of communication system 300 of FIG. 3 having an MPLS network 330 that receives IPv4 packets from a first IPv4 network 310 and routes those IPv4 packets as MPLS packets to a second IPv4 network 320, those skilled in the art will understand that the present disclosure is not limited to that context. In general, the present disclosure can be implemented for any suitable label-switch network that receives non-label-switch packets from any suitable, first, non-label-switch network and routes those non-label-switch packets as label-switch packets through the label-switch network to any suitable, second, non-label-switch network, which may conform to the same or different protocol as the first, non-label-switch network.

In certain embodiments, the present disclosure is a method for a node of a label-switching network. Te method comprises receiving an incoming packet and transmitting an outgoing packet based on the incoming packet. One of (A) the node is an ingress node, the incoming packet is a non-label-switch packet, and the outgoing packet is a label-switch packet; (B) the node is a transit node, the incoming and outgoing packets are label-switch packets; and (C) the node is an egress node, the incoming packet is a label-switch packet, and the outgoing packet is a non-label-switch packet. A label-switch packet comprises an extended special purpose label (ESPL) to encode one or more quality of service (QoS) attributes.

In at least some of the above embodiments, the label-switch packet further comprises an extension label that indicates presence of the ESPL label.

In at least some of the above embodiments, the one or more QoS attributes comprise an indication of congestion level.

In at least some of the above embodiments, the one or more QoS attributes comprise an indication of discard eligibility.

In at least some of the above embodiments, the one or more QoS attributes comprise an indication of Differentiated Services Code Point (DSCP) value.

In at least some of the above embodiments, the ESPL label includes more than three bits that indicate the DSCP value.

In at least some of the above embodiments, the ESPL label includes six bits that indicate the DSCP value.

In at least some of the above embodiments, the node is an ingress node or a transit node, and the node makes a queuing and scheduling decision based on the one or more QoS attributes.

In at least some of the above embodiments, the node is an egress node, and the node copies at least one of the QoS attributes into the outgoing packet.

In at least some of the above embodiments, the ESPL label is an extended QOS label comprising a 2-bit indication of congestion level; a 2-bit indication of discard eligibility; and a 6-bit indication of DSCP value.

In at least some of the above embodiments, the label-switching network is a Multi-Protocol Label Switching (MPLS) network, and the label-switch packet is an MPLS packet.

Unless explicitly stated otherwise, each numerical value and range should be interpreted as being approximate as if the word "about" or "approximately" preceded the value or range.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence. Likewise, additional steps may be included in such methods, and certain steps may be omitted or combined, in methods consistent with various embodiments of the disclosure.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Also, for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements. The same type of distinction applies to the use of terms "attached" and "directly attached," as applied to a description of a physical structure.

As used herein in reference to an element and a standard, the terms "compatible" and "conform" mean that the element communicates with other elements in a manner wholly or partially specified by the standard and would be recognized by other elements as sufficiently capable of communicating with the other elements in the manner specified by the standard. A compatible or conforming element does not need to operate internally in a manner specified by the standard.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The functions of the various elements shown in the figures, including any functional blocks labeled as "processors" and/or "controllers," may be provided through the use of dedicated hardware as well as hardware capable of executing software in association with appropriate software. Upon being provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

As will be appreciated by one of ordinary skill in the art, the present disclosure may be embodied as an apparatus (including, for example, a system, a network, a machine, a device, a computer program product, and/or the like), as a method (including, for example, a business process, a computer-implemented process, and/or the like), or as any combination of the foregoing. Accordingly, embodiments of the present disclosure may take the form of an entirely software-based embodiment (including firmware, resident software, micro-code, and the like), an entirely hardware embodiment, or an embodiment combining software and hardware aspects that may generally be referred to herein as a "system" or "network".

Embodiments of the disclosure can be manifest in the form of methods and apparatuses for practicing those methods. Embodiments of the disclosure can also be manifest in the form of program code embodied in tangible media, such as magnetic recording media, optical recording media, solid state memory, floppy diskettes, CD-ROMs, hard drives, or any other non-transitory machine-readable storage medium, wherein, upon the program code being loaded into and executed by a machine, such as a computer, the machine becomes an apparatus for practicing the disclosure. Embodiments of the disclosure can also be manifest in the form of program code, for example, stored in a non-transitory machine-readable storage medium including being loaded into and/or executed by a machine, wherein, upon the program code being loaded into and executed by a machine, such as a computer, the machine becomes an apparatus for practicing the disclosure. Upon being implemented on a general-purpose processor, the program code segments combine with the processor to provide a unique device that operates analogously to specific logic circuits. The term "non-transitory," as used herein, is a limitation of the medium itself (i.e., tangible, not a signal) as opposed to a limitation on data storage persistency (e.g., RAM vs. ROM).

Signals and corresponding terminals, nodes, ports, links, interfaces, or paths may be referred to by the same name and/or label and are interchangeable for purposes here.

In this specification including any claims, the term "each" may be used to refer to one or more specified characteristics of a plurality of previously recited elements or steps. When used with the open-ended term "comprising," the recitation of the term "each" does not exclude additional, unrecited elements or steps. Thus, it will be understood that an apparatus may have additional, unrecited elements and a method may have additional, unrecited steps, where the additional, unrecited elements or steps do not have the one or more specified characteristics.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. For example, the phrases "at least one of A and B" and "at least one of A or B" are both to be interpreted to have the same meaning, encompassing the following three possibilities: 1- only A; 2- only B; 3- both A and B.

All documents mentioned herein are hereby incorporated by reference in their entirety or alternatively to provide the disclosure for which they were specifically relied upon.

The embodiments covered by the claims in this application are limited to embodiments that (1) are enabled by this specification and (2) correspond to statutory subject matter. Non-enabled embodiments and embodiments that correspond to non-statutory subject matter are explicitly disclaimed even if they fall within the scope of the claims.

As used herein and in the claims, the term "provide" with respect to an apparatus or with respect to a system, device, or component encompasses designing or fabricating the apparatus, system, device, or component; causing the apparatus, system, device, or component to be designed or fabricated; and/or obtaining the apparatus, system, device, or component by purchase, lease, rental, or other contractual arrangement.

While preferred embodiments of the disclosure have been shown and described herein, it will be obvious to those skilled in the art that such embodiments are provided by way of example only. Numerous variations, changes, and substitutions will now occur to those skilled in the art without departing from the disclosure. It should be understood that various alternatives to the embodiments of the disclosure described herein may be employed in practicing the technology of the disclosure. It is intended that the following claims define the scope of the invention and that methods and structures within the scope of these claims and their equivalents be covered thereby.

## Claims

1. A method for a node (800) of a label-switching network (130), the method comprising:
receiving an incoming packet (310 P1); and
transmitting an outgoing packet (320 P1) based on the incoming packet (310 P1), wherein:
one of:
(A) the node (800) is an ingress node (R1), the incoming packet (330 P1) is a non-label-switch packet (310 P1), and the outgoing packet is a label-switch packet;
(B) the node is a transit node (R2), the incoming and outgoing packets are label-switch packets; and
(C) the node is an egress node (R3), the incoming packet is a label-switch packet (), and the outgoing packet is a non-label-switch packet (320 P1); and
a label-switch packet comprises an extended special purpose label (ESPL) (348) to encode one or more quality of service (QoS) attributes (350).

2. The method of claim 1, wherein the label-switch packet further comprises an extension label that indicates presence of the ESPL label.

3. The method of claim 1, wherein the one or more QoS attributes comprise an indication of congestion level.

4. The method of claim 1, wherein the one or more QoS attributes comprise an indication of discard eligibility.

5. The method of claim 1, wherein the one or more QoS attributes comprise an indication of Differentiated Services Code Point (DSCP) value.

6. The method of claim 5, wherein the ESPL label includes more than three bits that indicate the DSCP value.

7. The method of claim 6, wherein the ESPL label includes six bits that indicate the DSCP value.

8. The method of claim 1, wherein:
the node is an ingress node or a transit node; and
the node makes a queuing and scheduling decision based on the one or more QoS attributes.

9. The method of claim 1, wherein:
the node is an egress node; and
the node copies at least one of the QoS attributes into the outgoing packet.

10. The method of claim 1, wherein the ESPL label is an extended QOS label comprising:
a 2-bit indication of congestion level;
a 2-bit indication of discard eligibility; and
a 6-bit indication of DSCP value.

11. The method of claim 1, wherein:
the label-switching network is a Multi-Protocol Label Switching (MPLS) network; and
the label-switch packet is an MPLS packet.

12. A node comprising:
at least one processor; and
at least one memory storing instructions that, upon being executed by the at least one processor, cause the node at least to:
receive an incoming packet; and
transmit an outgoing packet based on the incoming packet, wherein:
one of:
(A) the node is an ingress node, the incoming packet is a non-label-switch packet, and the outgoing packet is a label-switch packet;
(B) the node is a transit node, the incoming and outgoing packets are label-switch packets; and
(C) the node is an egress node, the incoming packet is a label-switch packet, and the outgoing packet is a non-label-switch packet; and
a label-switch packet comprises an extended special purpose label (ESPL) to encode one or more quality of service (QoS) attributes.

13. The node of claim 12, comprising means for performing the method of any of claims 3 to 10.
